# EUROPEAN PATENT APPLICATION

(11) **EP 4 484 903 A1**
(43) Date of publication of application: **01.01.2025**
(21) Application number: 23756313.5
(22) Date of filing: 13.02.2023
(51) Int. Cl.: G01F 3/22, H04M 11/00, H04Q 9/00

(54) **GAS METER AND GAS SHUTOFF RESTORATION ASSESSMENT SYSTEM**

(30) Priority: 21.02.2022 JP 2022024564
(71) Applicant: Panasonic Intellectual Property Management Co., Ltd., Kadoma-shi, Osaka 571-0057 (JP)
(72) Inventor: YAMASHITA, Masumi, Osaka 571-0057 (JP); WATANABE, Takashi, Osaka 571-0057 (JP); SHIRASAWA, Tadanori, Osaka 571-0057 (JP); UEDA, Takahiro, Osaka 571-0057 (JP)
(74) Representative: SSM Sandmair
(86) International application number: PCT/JP2023/004717
(87) International publication number: WO 2023/157788

(57) **Abstract**

A gas meter includes: a flow rate measurer that is located at a passage through which gas to be supplied to a gas appliance located at a consumer's place flows, and measures a flow rate of the gas flowing through the passage; a self-diagnoser that performs self-diagnosis; a vibration detector that detects vibration; a calculator that calculates an earthquake index value based on the vibration detected by the vibration detector, the earthquake index value indicating the scale of an earthquake; a blocker that switches from an open state to a closed state when the earthquake index value is not less than a predetermined value, the open state being a state where the gas is allowed to flow through the passage, the closed state being a state where the flow of the gas in the passage is blocked; and a restoring method determiner that, when the blocker is in the closed state, determines a restoring method of restoring the blocker from the closed state to the open state based on a result of the diagnosis by the self-diagnoser and the earthquake index value.

## Description

### Technical Field

The present invention relates to a gas meter and a gas blocking restoration determining system each of which determines a restoring method from a state where gas supply from a gas container is being blocked.

### Background Art

In an emergency, such as an earthquake, a shutoff valve of a gas meter located at a consumer's place is closed, and therefore, gas supply is blocked. PTL 1 discloses a method of restoring the gas meter in accordance with a seismic intensity equivalent value after the blocking, i.e., a method of releasing the outflow of the gas from the gas container. In the invention described in PTL 1, for example, when the seismic intensity equivalent value is estimated as upper 5, the gas meter is automatically restored on condition that there is no leakage of the gas in a pipe.

### Citation List

### Patent Literature

PTL 1: Japanese Laid-Open Patent Application Publication No. 2014-055774

### Summary of Invention

### Technical Problem

However, the above conventional system that uniformly determines the restoring method for the gas meter in accordance with the seismic intensity has a problem that the safety of the entire gas infrastructure including the gas meter cannot be further improved. Moreover, it is difficult for an operator who performs recovery work to recognize the priority of the recovery work of the gas meter and a time necessary for the recovery work. Therefore, it is difficult to efficiently and quickly perform the recovery work.

An object of the present invention is to provide a gas meter and a gas blocking restoration determining system each of which can secure the safety of the entire gas infrastructure including the gas meter and improve the efficiency of the recovery work.

### Solution to Problem

A gas meter of the present invention includes: a flow rate measurer that is located at a passage through which gas to be supplied to a gas appliance located at a consumer's place flows, and measures a flow rate of the gas flowing through the passage; a self-diagnoser that performs self-diagnosis; a vibration detector that detects vibration; a calculator that calculates an earthquake index value based on the vibration detected by the vibration detector, the earthquake index value indicating the scale of an earthquake; a blocker that switches from an open state to a closed state when the earthquake index value is not less than a predetermined value, the open state being a state where the gas is allowed to flow through the passage, the closed state being a state where the flow of the gas in the passage is blocked; and a restoring method determiner that, when the blocker is in the closed state, determines a restoring method of restoring the blocker from the closed state to the open state based on a result of the diagnosis by the self-diagnoser and the earthquake index value.

According to the present invention, the restoring method of releasing the supply of the gas from the gas container is determined based on the result of the diagnosis by the self-diagnoser and the earthquake index value. Therefore, instead of uniformly determining the restoring method by using the result of the self-diagnosis, the restoring method can be determined while additionally considering the degree of influence on peripheral buildings and the like based on the earthquake index value. In this case, regarding the consumer's place, when it is provisionally determined based on the result of the diagnosis by the self-diagnoser that the restoring method is the manual restoration, and the calculated earthquake index value is a small value, the restoring method determiner can determine that the restoring method is the automatic restoration. Thus, the efficiency of the recovery work can be improved.

On the other hand, when the calculated earthquake index value is a large value, the safety of the entire gas infrastructure (the gas meter, a pipeline for the supply to the gas appliance, a pipeline from an outside to the gas meter, and the like) needs to be confirmed. Therefore, the confirmation of the safety of a range other than a range that the gas meter can directly involve needs to be urged. Thus, regarding the consumer's place, when it is provisionally determined based on the result of the diagnosis by the self-diagnoser that the restoring method is the automatic restoration, and the calculated earthquake index value is a large value, the restoring method determiner can determine that the restoring method is the manual restoration (i.e., restoring work at a worksite). Thus, the safety of the entire gas infrastructure can be secured.

In the above invention, the gas meter may further include a storage that stores consumer's place information regarding the consumer's place, wherein the restoring method determiner may determine the restoring method based on the result of the diagnosis by the self-diagnoser, the earthquake index value, and in addition, the consumer's place information.

According to the above configuration, the consumer's place information (information indicating the publicness level associated with each consumer's place, such as an ordinary home or a hospital) is added as the information used when determining the restoring method. Therefore, the restoring method can be determined in accordance with the publicness level. Thus, the securement of the safety of the entire gas infrastructure including the gas meter and the improvement of efficiency of the recovery work are realized, and in addition, the flexibility of the recovery work is improved.

A gas blocking restoration determining system of the present invention includes: gas meters corresponding to consumers' places; and a center server that is communicable with the gas meters, wherein: each of the gas meters includes a flow rate measurer that is located at a passage through which gas to be supplied to a gas appliance located at the consumer's place flows, and measures a flow rate of the gas flowing through the passage, a self-diagnoser that performs self-diagnosis, a vibration detector that detects vibration, a calculator that calculates an earthquake index value based on the vibration detected by the vibration detector, the earthquake index value indicating the scale of an earthquake, a blocker that switches from an open state to a closed state when the earthquake index value is not less than a predetermined value, the open state being a state where the gas is allowed to flow through the passage, the closed state being a state where the flow of the gas in the passage is blocked, and a communicator that communicates with the center server; and the center server includes an inspection method determiner that determines an inspection method for the gas meter corresponding to each consumer's place based on a result of the diagnosis by the self-diagnoser and the earthquake index value which have been acquired from the gas meter.

According to the present invention, the inspection method regarding, for example, the inspection ranking of the gas meter corresponding to each consumer's place is determined based on the result of the diagnosis by the self-diagnoser and the earthquake index value. Therefore, instead of uniformly determining the inspection ranking by using the result of the self-diagnosis, the inspection ranking can be determined while additionally considering the degree of influence on peripheral buildings and the like based on the earthquake index value. For example, when the earthquake index value is large, the safety of the entire gas infrastructure (the gas meter, a pipeline for the supply to the gas appliance, a pipeline from an outside to the gas meter, etc.) needs to be confirmed. Therefore, the confirmation of the safety in a range in which the gas meter can directly involve needs to be urged. Regarding this point, when the result of the diagnosis by the self-diagnoser is normal, and the earthquake index value is large, it is determined that confirmation at a worksite is necessary, and the inspection method determiner can determine to raise the priority of the recovery work. Thus, the recovery work (confirmation work) at a worksite and different recovery work can be distinguished from each other, and the recovery work can be quickly performed. Therefore, the high safety of the gas infrastructure can be secured. Moreover, when the result of the diagnosis by the self-diagnoser is abnormal, the recovery work requires time. Therefore, the priority of the recovery work can be lowered regardless of whether the earthquake index value is large or small. Thus, the efficiency of the recovery work can be improved.

In the above invention, the inspection method determiner may determine the inspection method for the gas meter based on an SI value as the earthquake index value.

According to the above configuration, as the earthquake index value, the SI value obtained in such a manner that the degree of damage of a building is converted into a numerical value is used. Thus, the inspection method determiner can more strictly determine the inspection method. Various values, such as seismic intensity, magnitude, acceleration, amplitude, and displacement, which can compare the scales of earthquakes can be used as the earthquake index value.

In the above invention, the center server may further include a storage that stores consumer's place information regarding each consumer's place, and the inspection method determiner may determine the inspection method based on the result of the diagnosis by the self-diagnoser, the earthquake index value, and in addition, the consumer's place information.

According to the above configuration, the consumer's place information (information indicating the publicness level associated with each consumer's place, such as an ordinary home or a hospital) is added as the information used when determining the inspection method. Therefore, the inspection method can be determined in accordance with the publicness level. Thus, for example, a hospital having higher publicness than an ordinary home can be preferentially set as an inspection target.

### Advantageous Effects of Invention

The present invention can provide the gas meter and the gas blocking restoration determining system each of which can secure the safety of the entire gas infrastructure including the gas meter, can improve the efficiency of the recovery work, can prioritize the recovery work of the consumer's place which prioritizes business or work, and is useful to accelerate the recovery work after the occurrence of a disaster.

### Brief Description of Drawings

FIG. 1A is a block diagram showing a configuration including a gas meter located at a consumer's place according to the present embodiment.
FIG. 1B is a block diagram showing a passage through which gas flows.
FIG. 2 is a diagram showing a restoring method table used when determining a restoring method.
FIG. 3 is a diagram showing another example of the restoring method table.
FIG. 4 is a diagram showing yet another example of the restoring method table.
FIG. 5 is a block diagram showing the configuration of a gas blocking restoration determining system according to the present embodiment.
FIG. 6 is a block diagram showing the configuration in the consumer's place in the gas blocking restoration determining system.
FIG. 7 is a block diagram showing the configuration of a center server in the gas blocking restoration determining system.
FIG. 8 is a diagram showing an inspection ranking table created when determining inspection rankings for consumers' places.
FIG. 9 is a diagram showing another example of the inspection ranking table created when determining the inspection rankings for the consumers' places.

### Description of Embodiments

Hereinafter, a gas meter and a gas blocking restoration determining system according to an embodiment of the present invention will be described with reference to the drawings. Each of the gas meter and the gas blocking restoration determining system described below is merely one embodiment. Therefore, the present invention is not limited to the following embodiment, and additions, deletions, and modifications may be made within the scope of the present invention.

### Gas Meter

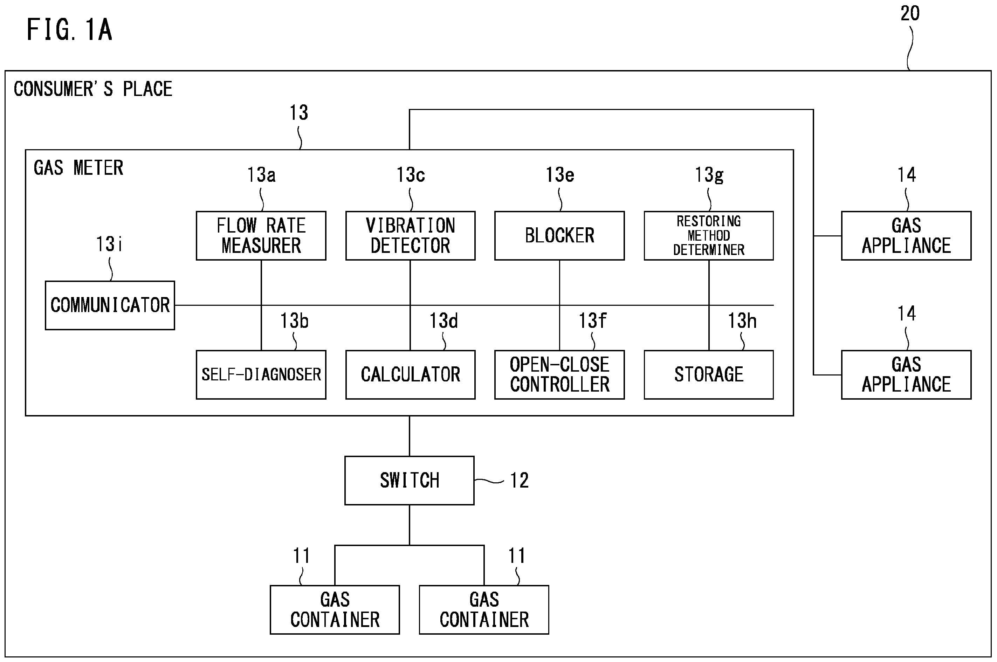

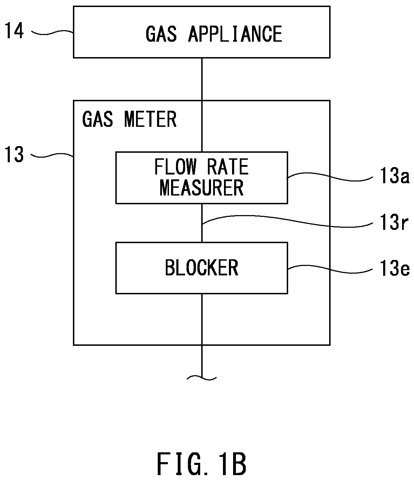

FIG. 1A is a block diagram showing a configuration including a gas meter 13 located at a consumer's place 20 according to the present embodiment. FIG. 1B is a block diagram showing a passage 13r through which gas flows. As shown in FIG. 1A, the consumer's place 20 includes two gas containers 11, a switch 12, the gas meter 13, and two gas appliances 14. Examples of the consumer's place 20 include a hospital, a school, a municipality facility, a nursing facility, an ordinary home, and a commercial facility. However, the consumer's place 20 is not limited to these and may be a building that may use gas.

The gas container 11 is also called a gas bomb and is filled with gas, such as LP gas (liquefied petroleum gas). The switch 12 switches the passage 13r such that the gas in one of the two gas containers 11 is supplied to the gas appliances 14. Thus, even when the gas in one of the two gas containers 11 runs out, the gas in the other gas container 11 may be supplied to the gas appliances 14.

For example, each of the gas appliances 14 is a gas stove, a gas-powered water heater, a gas-powered fan heater, or the like. However, the gas appliance 14 is not limited to these and may be an appliance that consumes gas.

The gas meter 13 measures the flow rate of the gas supplied to each gas appliance 14 (i.e., the amount of gas used in each gas appliance 14). Hereinafter, the detailed configuration of the gas meter 13 will be described.

The gas meter 13 includes a flow rate measurer 13a, a self-diagnoser 13b, a vibration detector 13c, a calculator 13d, a blocker 13e, an open-close controller 13f, a restoring method determiner 13g, a storage 13h, and a communicator 13i. Each of the self-diagnoser 13b, the calculator 13d, the open-close controller 13f, and the restoring method determiner 13g among the components of the gas meter 13 is functionally realized by a microcontroller including a CPU (Central Processing Unit) and a memory (a ROM (Read Only Memory) and a RAM (Random Access Memory)) storing a program or by an ASIC (Application Specific Integrated Circuit). Moreover, various memories, hard disks, and the like may be used as the storage 13h.

The flow rate measurer 13a is located at the passage 13r through which the gas to be supplied to the gas appliances 14 flows. The flow rate measurer 13a measures the flow rate of the gas flowing through the passage 13r. To be specific, the flow rate measurer 13a measures the amount of gas used in the gas appliances 14.

The self-diagnoser 13b performs self-diagnosis of the gas meter 13. Specifically, the self-diagnoser 13b performs diagnosis regarding whether or not the gas meter 13 itself can normally operate and diagnosis regarding whether or not the gas meter 13 can supply the gas to the gas appliances 14. For example, the self-diagnoser 13b detects gas leakage from the component of the gas meter 13, a decrease in gas pressure in the component, whether or not the component can normally operate, whether or not the components can normally communicate with each other, and whether or not there is an abnormality, such as wire breaking. However, these abnormalities are merely examples of the abnormality that may be detected by the self-diagnoser 13b, and the abnormalities are not limited to these. To be specific, examples of the abnormality detected by the self-diagnoser 13b include all of various abnormalities that occur when the gas meter 13 itself cannot normally operate and various abnormalities that occur when the gas meter 13 cannot supply the gas to the gas appliances 14.

The vibration detector 13c detects vibration. Specifically, the vibration detector 13c is a seismic sensor that detects an acceleration value of the vibration. A below-described SI value is calculated based on a detection result obtained by the vibration detector 13c. The SI (Spectral Intensity) value is commonly used as a value obtained in such a manner that the degree of damage of a building is converted into a numerical value.

The calculator 13d calculates an earthquake index value that indicates the scale of an earthquake based on the vibration detected by the vibration detector 13c. In the present embodiment, the calculator 13d calculates, for example, the SI value as the earthquake index value.

When the earthquake index value is not less than a predetermined value, the blocker 13e switches from an open state in which the gas can flow through the passage 13r to a closed state in which the flow of the gas in the passage 13r is blocked. The open-close controller 13f controls open-close operations of the blocker 13e. When the SI value corresponding to an earthquake or the like is not less than the predetermined value or when there is some kind of abnormality, the open-close controller 13f blocks the passage 13r by the blocker 13e. Thus, the supply of the gas from the gas containers 11 to the gas appliances 14 is blocked.

When the blocking of the blocker 13e is performed by the control of the open-close controller 13f, the restoring method determiner 13g determines a restoring method of releasing the outflow of the gas from the gas container 11 thereafter. In this case, the restoring method determiner 13g determines the restoring method based on the type of the self-diagnosis and the SI value. As the restoring method, there are automatic restoration, remote restoration, and manual restoration.

The automatic restoration is processing in which: the gas meter 13 itself automatically executes gas leakage inspection; and when there is no gas leakage, the open-close controller 13f automatically changes the blocker 13e from the closed state to the open state. The gas meter 13 itself determines as above. Therefore, to perform the automatic restoration, the securement of high safety needs to be confirmed. Moreover, the remote restoration is processing in which the blocker 13e is changed from the closed state to the open state by a command from a below-described center server 10. Since the remote restoration is remotely performed by the determination of a person, the remote restoration can be executed after surrounding information and the like are collected. Furthermore, the manual restoration is performed in such a manner that the blocker 13e is changed from the closed state to the open state by recovery work performed by an operator at a worksite. The manual restoration is executed after the worksite is confirmed when whether to perform the restoration cannot be determined. Determining the restoring method by the restoring method determiner 13g will be described later in detail.

The storage 13h of the gas meter 13 prestores consumer's place information that indicates a publicness level of the consumer's place corresponding to the gas meter 13. Moreover, the storage 13h stores a below-described restoring method table T1 that is referred to when determining the restoring method (the automatic restoration, the remote restoration, and the manual restoration). The restoring method table T1 includes information indicating a predetermined parameter. Examples of the above parameter include various self-diagnoses (below-described abnormalities (a) and (b), etc.) and the SI value as the earthquake index value. Moreover, the consumer's place information regarding the consumer's place 20 at which the gas meter 13 is located may be included in the restoring method table. This will be described later. The above consumer's place information is information indicating the level of the publicness corresponding to the consumer's place 20 and is information indicating that the larger the numerical value is, the higher the publicness is. For example, the consumer's place information of the consumer's place 20 that is a hospital is set to 5, and the consumer's place information of the consumer's place 20 that is an ordinary home is set to 1.

The communicator 13i has a function of performing wireless communication with the below-described center server 10. As a wireless communication system between the communicator 13i and the center server 10, a communication network, such as the Internet, a LAN, or a LPWA (Low Power Wide Area), can be used. The communicator 13i periodically transmits information regarding the amount of gas used in the gas appliances 14 of the consumer's place 20, the consumer's place information by which the consumer's place is identified, and the like to the center server 10. The communicator 13i performs not only periodical transmissions but also transmissions, such as an alarm at the time of the detection of the abnormality, for informing of abnormality detection at the timing of the detection.

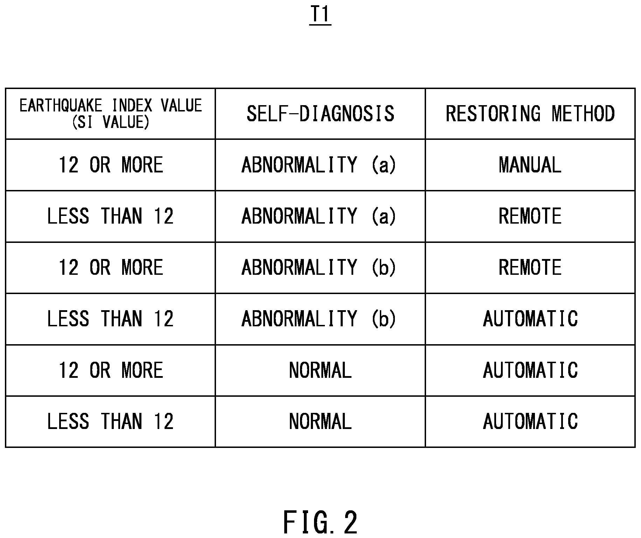

Hereinafter, processing of determining the restoring method for the gas meter 13 in which the blocker 13e has become the closed state by an earthquake will be described. The gas meter 13 that has become the closed state determines its own restoring method by the restoring method determiner 13g based on the result of the diagnosis by the self-diagnoser 13b and the earthquake index value. FIG. 2 is a diagram showing the restoring method table T1 used when determining the restoring method.

As shown in FIG. 2, the restoring method table T1 includes the earthquake index values (SI values), the self-diagnoses, and the restoring methods.

The restoring method determiner 13g determines the restoring method based on the information stored in the restoring method table T1. To be specific, the restoring method table T1 is a determination table used when the restoring method determiner 13g determines the restoring method. The restoring method determiner 13g determines the restoring method by referring to the restoring method table T1 based on the SI value calculated by the calculator 13d and the result of the diagnosis by the self-diagnoser 13b.

In the determination of the restoring method by using the restoring method table T1, when the result of the diagnosis by the self-diagnoser 13b is the abnormality (a), the restoring method is the manual restoration in principle. However, when the result of the diagnosis is the abnormality (a), and the SI value is less than a threshold (for example, 12), the remote restoration is determined as the restoring method. On the other hand, when the result of the diagnosis by the self-diagnoser 13b is the abnormality (b), the restoring method is the automatic restoration in principle. However, when the result of the diagnosis is the abnormality (b), and the SI value is not less than the above threshold, the remote restoration is determined as the restoring method. The abnormalities (a) and (b) are abnormalities that occur in the gas meter 13 and are different in type from each other. Moreover, when the result of the diagnosis by the self-diagnoser 13b is normal, the restoring method is the automatic restoration.

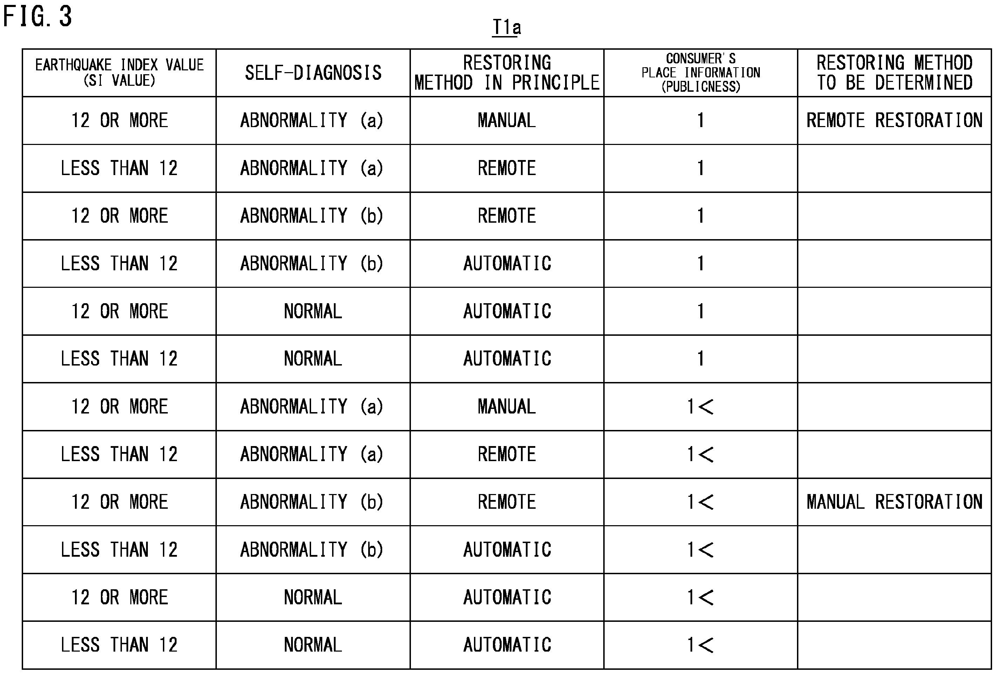

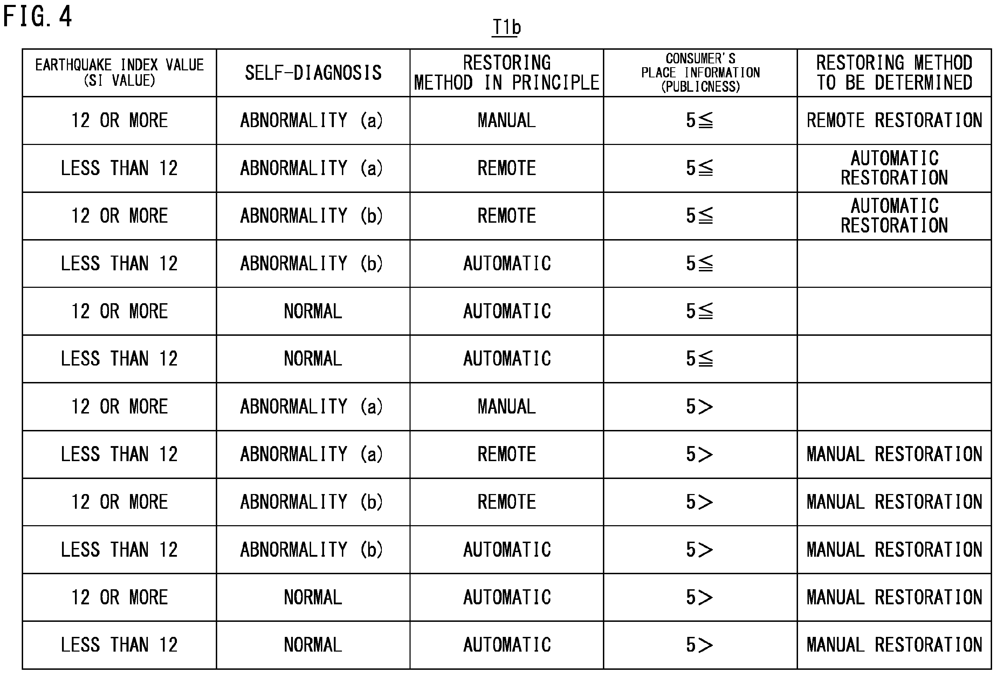

The restoring method table may further include the consumer's place information indicating the publicness level. FIG. 3 is a diagram showing a restoring method table T1a as another example. FIG. 4 is a diagram showing a restoring method table T1b as yet another example.

As shown in FIG. 3, the restoring method table T1a includes not only the SI values and the types of the self-diagnosis but also the consumer's place information indicating the publicness levels. The restoring method determiner 13g determines the restoring method by referring to the restoring method table T1a based on the SI value calculated by the calculator 13d, the result of the diagnosis by the self-diagnoser 13b, and the consumer's place information prestored in the storage 13h.

Hereinafter, some examples of processing of determining the restoring method based on the restoring method table T1a will be described. In the determination of the restoring method by using the restoring method table T1a, when the result of the diagnosis by the self-diagnoser 13b is the abnormality (a), the restoring method is the manual restoration in principle. However, when the result of the diagnosis is the abnormality (a), and the publicness is 1 (i.e., the publicness is low), the remote restoration is determined as the restoring method. The consumer's place having the publicness of 1 is, for example, an ordinary house. On the other hand, when the result of the diagnosis by the self-diagnoser 13b is the abnormality (b), the restoring method is the remote restoration in principle. However, when the result of the diagnosis is the abnormality (b), and the publicness exceeds 1 (i.e., the publicness is high), the manual restoration is determined as the restoring method. When "RESTORING METHOD TO BE DETERMINED" in the restoring method table T1a is a blank, the restoring method in principle is determined as the restoring method. The same is true in the restoring method table T1b of FIG. 4.

As shown in FIG. 4, the restoring method table T1b also includes not only the SI values and the types of the self-diagnosis but also the consumer's place information indicating the publicness levels. The restoring method determiner 13g may determine the restoring method by referring to the restoring method table T1b based on the calculated SI value, the result of the diagnosis by the self-diagnoser 13b, and the consumer's place information. The restoring methods in principle each of which corresponds to the SI value and the type of the self-diagnosis in the restoring method table T1b are the same as the restoring methods in principle each of which corresponds to the SI value and the type of the self-diagnosis in the restoring method table T1a.

In the determination of the restoring method by using the restoring method table T1b, when the publicness of the consumer's place is high (when the publicness is, for example, 5 or more), and the restoring method in principle is the remote restoration, the automatic restoration is determined as the restoring method. When the publicness of the consumer's place is high, and the restoring method in principle is the manual restoration, the remote restoration is determined as the restoring method. This is based on a viewpoint that the convenience of the recovery work and the improvement of efficiency of the recovery work are prioritized when the consumer's place is, for example, an unmanned commercial facility. On the other hand, when the publicness of the consumer's place is low (when the publicness is, for example, less than 5), the manual restoration is determined as the restoring method in all the cases. As above, the restoring method can be determined in accordance with the publicness.

### Gas Blocking Restoration Determining System Including Gas Meter

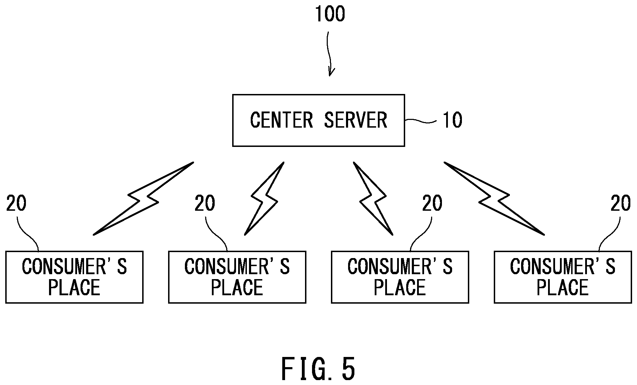

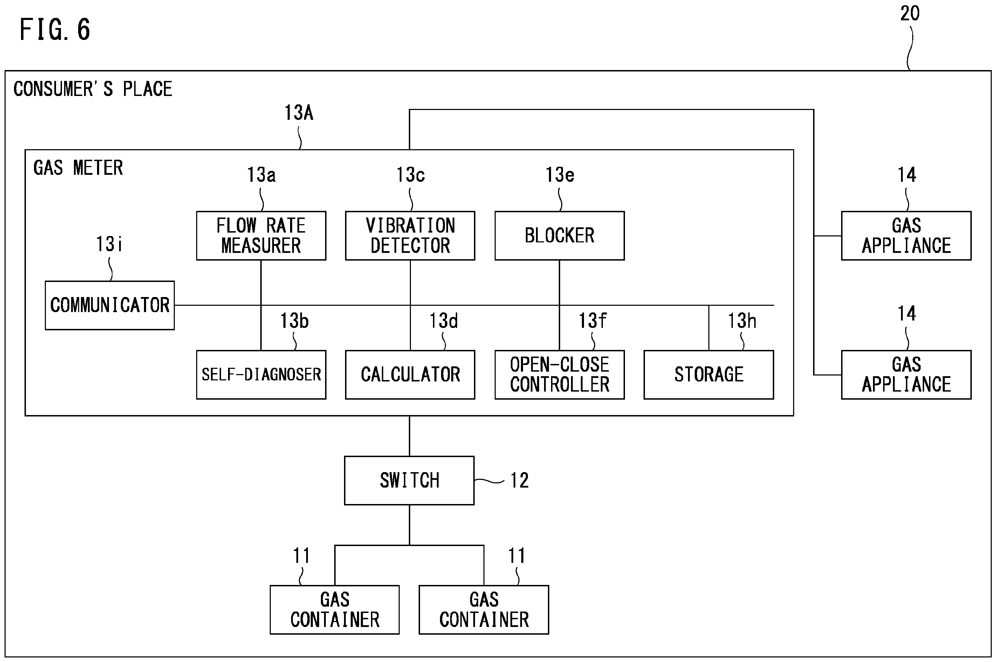

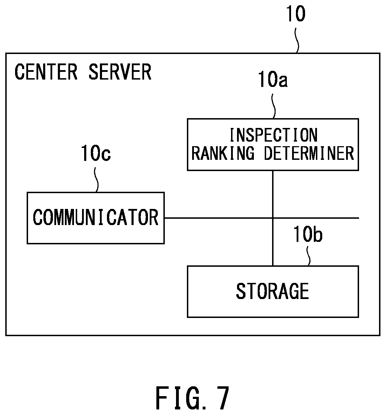

FIG. 5 is a block diagram showing the configuration of a gas blocking restoration determining system 100 according to the present embodiment. FIG. 6 is a block diagram showing the configuration in the consumer's place 20 in the gas blocking restoration determining system 100. Moreover, FIG. 7 is a block diagram showing the configuration of the center server 10 in the gas blocking restoration determining system 100. In FIG. 6, the same reference signs are used for the components that are the same as those in FIG. 1, and explanations thereof are omitted except for a case where special mention is required.

As shown in FIG. 5, the gas blocking restoration determining system 100 includes the center server 10 and the consumers' places 20. FIG. 5 shows four consumers' places 20. However, the number of consumers' places 20 in the gas blocking restoration determining system 100 may be three or less or may be five or more.

As shown in FIG. 6, a gas meter 13A in the gas blocking restoration determining system 100 includes the flow rate measurer 13a, the self-diagnoser 13b, the vibration detector 13c, the calculator 13d, the blocker 13e, the open-close controller 13f, the storage 13h, and the communicator 13i.

As shown in FIG. 7, the center server 10 includes an inspection ranking determiner 10a, a storage 10b, and a communicator 10c. The inspection ranking determiner 10a corresponds to an inspection method determiner. The inspection ranking determiner 10a is functionally realized by a microcontroller including a CPU, a memory storing a program, and a RAM or by an ASIC. Various memories, hard disks, and the like may be used as the storage 10b. Moreover, the communicator 10c performs wireless communication with the communicators 13i of the consumers' places 20. Processing of the inspection ranking determiner 10a will be described later in detail.

The storage 10b of the center server 10 stores a logic (calculation formula) for determining a below-described inspection ranking from the SI value calculated by the calculator 13d of the gas meter 13A, the result of the diagnosis by the self-diagnoser 13b, and the consumer's place information regarding the consumer's place 20. Moreover, the storage 10b prestores the consumer's place information indicating the publicness level of the consumer's place corresponding to each gas meter 13A.

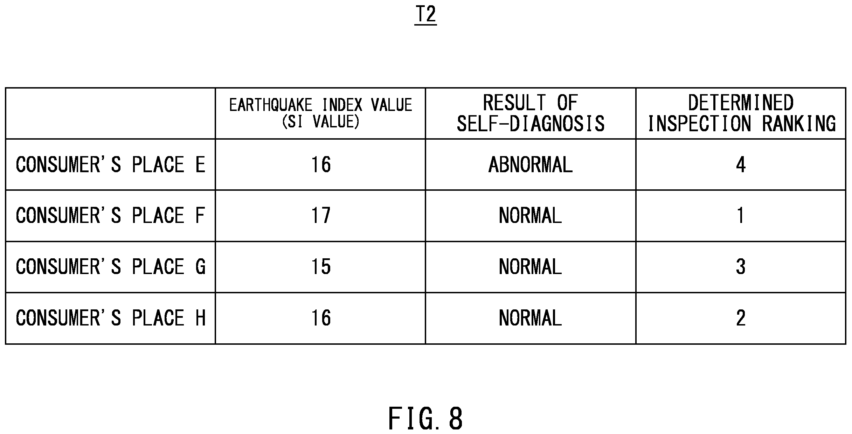

FIG. 8 is a diagram showing an inspection ranking table T2 created when determining the inspection rankings for the consumers' places 20.

As shown in FIG. 8, the inspection ranking table T2 includes the earthquake index values (SI values), the results of the self-diagnosis, and the determined inspection rankings for the respective consumers' places 20. The inspection ranking table T2 and a below-described inspection ranking table T3 are stored in the storage 10b.

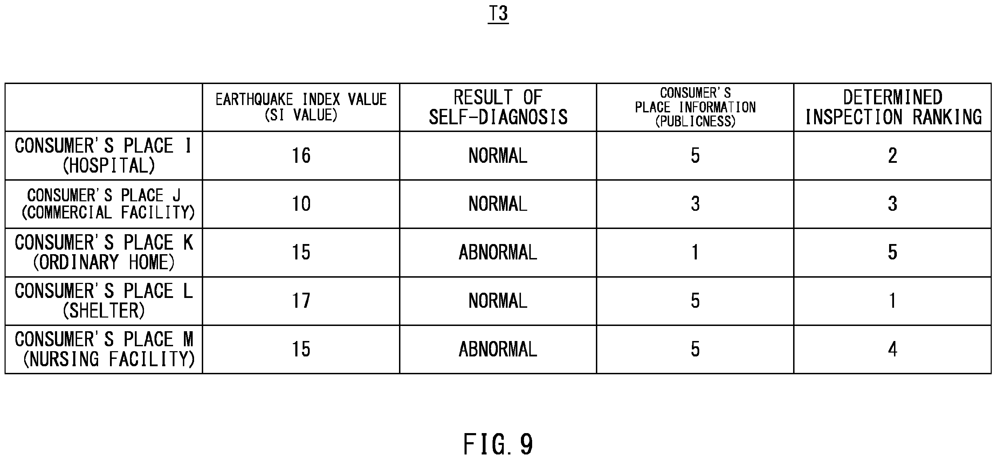

When the inspection ranking determiner 10a receives the SI value and the result of the self-diagnosis from each gas meter 13A, the inspection ranking determiner 10a stores the SI value and the result of the self-diagnosis for each consumer's place 20 in the inspection ranking table T2. The same is true in FIG. 9 described below. Moreover, the inspection ranking determiner 10a determines the inspection ranking of the gas meter 13A corresponding to each consumer's place 20 based on the SI value and the result of the self-diagnosis which are stored in the inspection ranking table T2. The following will describe details. In the inspection ranking table T2, four consumers' places 20 are shown as consumers' places E to H for ease of identification.

In the inspection ranking table T2, regarding the consumer's place E, the SI value is 16, and the result of the self-diagnosis is abnormal. Similarly, regarding the consumer's place F, the SI value is 17, and the result of the self-diagnosis is normal. Regarding the consumer's place G, the SI value is 15, and the result of the self-diagnosis is normal. Moreover, regarding the consumer's place H, the SI value is 16, and the result of the self-diagnosis is normal.

From a viewpoint that the recovery work requires time when the result of the self-diagnosis is abnormal, the inspection ranking determiner 10a first sets the inspection ranking of the gas meter 13A having the normal result of the self-diagnosis higher than the inspection ranking of the gas meter 13A having the abnormal result of the self-diagnosis. To be specific, the inspection ranking of the gas meter 13A having the abnormal result is inferior to the inspection ranking of the gas meter 13A having the normal result. In this case, in FIG. 8, the inspection rankings of the consumers' places F, G, and H are prioritized over the inspection ranking of the consumer's place E. At this point of time, the inspection ranking determiner 10a determines that the inspection ranking of the gas meter 13A corresponding to the consumer's place E is the fourth. The inspection ranking determiner 10a stores the determined inspection ranking in the inspection ranking table T2 (the same is true in the following description).

Next, the inspection ranking determiner 10a determines the inspection rankings of the consumers' places F, G, and H. At this time, the inspection ranking determiner 10a prioritizes the inspection ranking when the SI value is larger. In FIG. 8, the SI value is larger in order of the consumer's place F, the consumer's place H, and the consumer's place G. Therefore, the inspection ranking determiner 10a determines that the inspection ranking of the consumer's place F is the first, determines that the inspection ranking of the consumer's place H is the second, and determines that the inspection ranking of the consumer's place G is the third. After the inspection ranking determiner 10a determines the inspection rankings of the consumers' places 20 in the inspection ranking table T2, the inspection ranking determiner 10a informs the gas meters 13A corresponding to the consumers' places 20 of the inspection rankings.

As above, when the result of the self-diagnosis is abnormal, the recovery work requires time. Therefore, the priority of the recovery work, i.e., the inspection ranking can be lowered regardless of whether the SI is large or small. Thus, the efficiency of the recovery work can be improved.

The inspection ranking determiner 10a may determine the inspection rankings of the consumers' places 20 based on the result of the self-diagnosis, the SI value, and in addition, the consumer's place information. FIG. 9 is a diagram showing the inspection ranking table T3 created when determining the inspection rankings of the consumers' places 20. In the inspection ranking table T3, five consumers' places 20 are shown as consumers' places I to M for ease of identification.

As shown in FIG. 9, the inspection ranking table T3 includes the earthquake index values (SI values), the results of the self-diagnosis, the consumer's place information, and the determined inspection rankings for the respective consumers' places 20.

In the inspection ranking table T3, regarding the consumer's place I that is, for example, a hospital, the SI value is 16, the result of the self-diagnosis is normal, and the consumer's place information is 5. Similarly, regarding the consumer's place J that is, for example, a commercial facility, the SI value is 10, the result of the self-diagnosis is normal, and the consumer's place information is 3. Regarding the consumer's place K that is, for example, an ordinary home, the SI value is 15, the result of the self-diagnosis is abnormal, and the consumer's place information is 1. Moreover, regarding the consumer's place L that is, for example, a shelter, the SI value is 17, the result of the self-diagnosis is normal, and the consumer's place information is 5. Regarding the consumer's place M that is, for example, a nursing facility, the SI value is 15, the result of the self-diagnosis is abnormal, and the consumer's place information is 5.

From the same viewpoint as above, the inspection ranking determiner 10a first sets the inspection ranking of the gas meter 13A having the normal result of the self-diagnosis higher than the inspection ranking of the gas meter 13A having the abnormal result of the self-diagnosis. In this case, in FIG. 9, the inspection rankings of the consumers' places I, J, and L are prioritized over the inspection rankings of the consumers' places K and M.

Next, among the pieces of consumer's place information of the consumers' places K and M, the inspection ranking determiner 10a prioritizes the inspection ranking when the consumer's place information is larger. In FIG. 9, the consumer's place information is larger in order of the consumer's place M and the consumer's place K. Therefore, the inspection ranking determiner 10a determines that the inspection ranking of the consumer's place M is the fourth and determines that the inspection ranking of the consumer's place K is the fifth. The inspection ranking determiner 10a stores the determined inspection rankings in the inspection ranking table T3.

Next, as with the above, among the pieces of consumer's place information of the consumers' places I, J, and L, the inspection ranking determiner 10a prioritizes the inspection ranking when the consumer's place information is larger. In FIG. 9, the consumer's place information of the consumer's place J is smaller than each of those of the consumer's place I and the consumer's place L. Therefore, the inspection ranking determiner 10a determines that the inspection ranking of the consumer's place J is the third.

Herein, both of the consumer's place information of the consumer's place I and the consumer's place information of the consumer's place L are 5, i.e., have the same value. Therefore, to determine the inspection rankings of the consumers' places I and L, the inspection ranking determiner 10a prioritizes the inspection ranking when the SI value is larger. In FIG. 9, since the SI value of the consumer's place L is larger than the SI value of the consumer's place I, the inspection ranking determiner 10a determines that the inspection ranking of the consumer's place L is the first and determines that the inspection ranking of the consumer's place I is the second. After the inspection ranking determiner 10a determines the inspection rankings of the consumers' places 20 in the inspection ranking table T3, the inspection ranking determiner 10a informs the gas meters 13A corresponding to the consumers' places 20 of the inspection rankings. As above, while improving the efficiency of the recovery work, the inspection rankings of the recovery work can be determined based on the priority used when the safety of the entire gas infrastructure including the gas meter 13A is needed due to the large SI value.

As described above, according to the gas meter 13 of the present embodiment, the restoring method for the gas meter 13 is determined based on the result of the self-diagnosis, the SI value, and the consumer's place information. Therefore, instead of uniformly determining the restoring method by using the result of the self-diagnosis, the restoring method can be determined while additionally considering the degree of influence on peripheral buildings and the like based on the SI value and the publicness level corresponding to the consumer's place. Thus, the securement of the high safety of the entire gas infrastructure including the gas meter 13 and the improvement of efficiency of the recovery work are realized, and the flexibility of the recovery work is improved.

Moreover, according to the gas blocking restoration determining system 100 of the present embodiment, the inspection ranking of the gas meter 13A of each consumer's place 20 is determined based on the result of the self-diagnosis and the SI value. Therefore, instead of uniformly determining the inspection ranking by using the result of the self-diagnosis, the inspection ranking can be determined while additionally considering the degree of influence on peripheral buildings and the like based on the SI value. Thus, the securement of the high safety of the entire gas infrastructure including the gas meter 13A and the improvement of efficiency of the recovery work are realized, and the flexibility of the recovery work is improved. Moreover, when the inspection ranking of the gas meter 13A corresponding to each consumer's place 20 is determined based on the result of the self-diagnosis, the SI value, and in addition, the consumer's place information, the inspection ranking of the consumer's place 20 having high publicness can be prioritized over the inspection ranking of the consumer's place 20 having low publicness. Thus, the inspection ranking can be determined while additionally considering the publicness level of the consumer's place 20.

### Modified Example

The present invention is not limited to the above embodiment, and various modifications may be made within the scope of the present invention. Examples are as below.

According to the gas blocking restoration determining system 100 of the above embodiment, when determining the inspection rankings of the gas meters 13A of the consumers' places 20 based on the inspection ranking table T3, the inspection rankings are determined in such a manner that whether the consumer's place information is large or small is determined first, and then, whether the SI value is large or small is determined. However, the above embodiment is not limited to this. The inspection rankings may be determined in such a manner that whether the SI value is large or small is determined first, and then, whether the consumer's place information is large or small is determined.

Moreover, according to the gas blocking restoration determining system 100 of the above embodiment, as one example of the inspection method, the inspection ranking determiner 10a determines the inspection ranking of the gas meter 13 for each consumer's place 20. However, the above embodiment is not limited to this. As another example of the inspection method, the restoring method of the gas meter 13 may be determined for each consumer's place 20.

Moreover, in the above embodiment, the SI value is used as the earthquake index value. However, the above embodiment is not limited to this. For example, the value of the seismic intensity may be used as the earthquake index value.

Moreover, in the above embodiment, there are two gas containers 11 and two gas appliances 14 in each consumer's place 20. However, the above embodiment is not limited to this. The number of gas containers 11 may be one or three or more, and the number of gas appliances 14 may be one or three or more.

Furthermore, in the above embodiment, the gas container 11 is filled with the LP gas (liquefied petroleum gas) as one example of the gas. However, the above embodiment is not limited to this. The gas container 11 may be filled with gas, such as oxygen.

### Reference Signs List

10 center server
10a inspection ranking determiner
10b storage
10c communicator
11 gas container
13, 13A gas meter
13a flow rate measurer
13b self-diagnoser
13c vibration detector
13d calculator
13e blocker
13f open-close controller
13g restoring method determiner
13h storage
13i communicator
13r passage
14 gas appliance
20 consumer's place
100 gas blocking restoration determining system

## Claims

1. A gas meter comprising:
a flow rate measurer that is located at a passage through which gas to be supplied to a gas appliance located at a consumer's place flows, and measures a flow rate of the gas flowing through the passage;
a self-diagnoser that performs self-diagnosis;
a vibration detector that detects vibration;
a calculator that calculates an earthquake index value based on the vibration detected by the vibration detector, the earthquake index value indicating the scale of an earthquake;
a blocker that switches from an open state to a closed state when the earthquake index value is not less than a predetermined value, the open state being a state where the gas is allowed to flow through the passage, the closed state being a state where the flow of the gas in the passage is blocked; and
a restoring method determiner that, when the blocker is in the closed state, determines a restoring method of restoring the blocker from the closed state to the open state based on a result of the diagnosis by the self-diagnoser and the earthquake index value.

2. The gas meter according to claim 1, further comprising a storage that stores consumer's place information regarding the consumer's place, wherein
the restoring method determiner determines the restoring method based on the result of the diagnosis by the self-diagnoser, the earthquake index value, and in addition, the consumer's place information.

3. A gas blocking restoration determining system comprising:
gas meters corresponding to consumers' places; and
a center server that is communicable with the gas meters, wherein:
each of the gas meters includes
a flow rate measurer that is located at a passage through which gas to be supplied to a gas appliance located at the consumer's place flows, and measures a flow rate of the gas flowing through the passage,
a self-diagnoser that performs self-diagnosis,
a vibration detector that detects vibration,
a calculator that calculates an earthquake index value based on the vibration detected by the vibration detector, the earthquake index value indicating the scale of an earthquake,
a blocker that switches from an open state to a closed state when the earthquake index value is not less than a predetermined value, the open state being a state where the gas is allowed to flow through the passage, the closed state being a state where the flow of the gas in the passage is blocked, and
a communicator that communicates with the center server; and
the center server includes an inspection method determiner that determines an inspection method for the gas meter corresponding to each consumer's place based on a result of the diagnosis by the self-diagnoser and the earthquake index value which have been acquired from the gas meter.

4. The gas blocking restoration determining system according to claim 3, wherein the inspection method determiner determines the inspection method for the gas meter based on an SI value as the earthquake index value.

5. The gas blocking restoration determining system according to claim 3 or 4, wherein:
the center server further includes a storage that stores consumer's place information regarding each consumer's place; and
the inspection method determiner determines the inspection method based on the result of the diagnosis by the self-diagnoser, the earthquake index value, and in addition, the consumer's place information.
